(19)

Europäisches
Patentamt
European
Patent Office
Office européen
des brevets

(11) **EP 3 561 671 A1**

(12) **EUROPEAN PATENT APPLICATION**

(43) Date of publication:
**30.10.2019 Bulletin 2019/44**

(51) Int Cl.:
***G06F 9/50*** *(2006.01)*

(21) Application number: **18169702.0**

(22) Date of filing: **27.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Solutions and Networks Oy 02610 Espoo (FI)**

(72) Inventors:
• LUGONES, Diego
  **15 Dublin (IE)**
• CELLO, Marco
  **15 Dublin (IE)**

(74) Representative: **Bryers LLP**
   **7 Gay Street**
   **Bath, Bath and North East Somerset BA1 2PH (GB)**

(54) **ALLOCATING WORKLOAD**

(57)    A method, in a function as a service platform comprising multiple containers configured to execute a function, for allocating workload in response to incoming requests, comprises, in examples, determining a current number of requests to be executed by respective ones of the multiple containers, logically isolating one or more of the multiple containers in which the current number of requests to be executed exceeds a predetermined threshold value related to a service level objective for the function, forming a container group composed of non-isolated containers, and allocating the incoming requests between respective ones of the containers in the container group.

Figure 1

**Description**

TECHNICAL FIELD

Examples relate, in general, to methods for allocating workload and to serverless platforms.

BACKGROUND

A serverless platform provides a form of utility computing in which an application can be executed as a set of small, stateless functions with access to a data store. These functions can be triggered by external and/or internal events or other functions, thereby forming function chains. A serverless platform can therefore provide a function as a service.

SUMMARY

According to an example, there is provided a method, in a function as a service platform comprising multiple containers configured to execute a function, for allocating workload in response to incoming requests, the method comprising determining a current number of requests to be executed by respective ones of the multiple containers, logically isolating one or more of the multiple containers in which the current number of requests to be executed exceeds a predetermined threshold value related to a service level objective for the function, forming a container group composed of non-isolated containers, and allocating the incoming requests between respective ones of the containers in the container group. The number of containers in the container group can be supplemented by instantiating one or more containers for the function. The number of containers in the container group can be supplemented by reassigning a container configured to execute a second function in the platform to the container group. A reassigned container can be re-tasked to execute the function. An optimal number of the multiple containers to logically isolate for the function can be determined. An isolated container can be unified into the container group.

According to an example, there is provided a virtualised computing platform, comprising a workload controller to logically detach one or more of multiple containers configured to execute a first function for the platform, whereby to form a container group comprising a set of available containers, and allocate respective ones of incoming requests for the function to one or more containers in the container group. The workload controller can supplement the number of containers in the container group by instantiating one or more containers for the function. The workload controller can supplement the number of containers in the container group by reassigning an existing container configured to execute a second function in the platform to the container group. The workload controller can determine a first period of time remaining before the existing container finishes executing any pending requests relating to the second function, determine a second period of time to instantiate a new container for the container group, and re-task the existing container to execute the first function when the pending requests are executed and the first period of time is less than the second period of time.

According to an example, there is provided a workload controller in a serverless function-as-a-service platform, the workload controller to logically isolate one or more of multiple containers configured to execute a first function for the platform, whereby to form a container group comprising a set of available containers, and allocate respective ones of incoming requests for the function to one or more containers in the container group. The workload controller can augment the container group with one or more additional containers configured to execute the first function, wherein at least one of the additional containers is reassigned from a second function. The workload controller can receive data representing an expected load for the function. The workload controller can remove a reassigned container from a set of available containers. The workload controller can re-attach a logically isolated container to the platform.

BRIEF DESCRIPTION OF THE DRAWINGS

Embodiments will now be described, by way of example only, with reference to the accompanying drawings, in which:

Figure 1 is a schematic representation of a serverless platform according to an example;

Figure 2 is a schematic representation of a serverless function-as-a-service platform according to an example;

Figure 3 is a schematic representation of a serverless function as a service platform according to an example;

Figures 4a-c are schematic representations of a serverless function-as-a-service platform according to an example;

Figure 5 is a schematic representation of a serverless function-as-a-service platform according to an example;

Figure 6 is a schematic representation of a virtualised computing platform according to an example; and

Figure 7 is a flowchart of a method according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In a serverless platform, server management and capacity planning decisions are hidden from developers or operators such that they do not need to specify and configure cloud instances (i.e. virtual machines - VMs and/or containers) within which functions execute. Configuration and dynamic management of virtual resources, as well as the runtime environment, are the responsibility of the cloud operator. That is, the operator provides and manages the virtual environment where developers can deploy applications and services without the burden of configuring cores and memory of virtual machines or specifying scaling thresholds and populate templates and so on. From a billing perspective, instead of acquiring cloud instances on a time basis (i.e. hour, day, month, year), developers pay for the number of requests accessing their applications.

A serverless platform can comprise a proxy (or API gateway), a set of containers, and a datastore. Applications running on top of serverless platforms may have many stateless functions whose state information can be saved in the datastore and fetched during the execution of the function. The execution of functions can be triggered by such events as: user request accessing the application; termination of a function that trigger another function in the application chain; a change in a database; etc. The serverless proxy routes every request to the proper containers, and each container has a proper runtime that executes the functions.

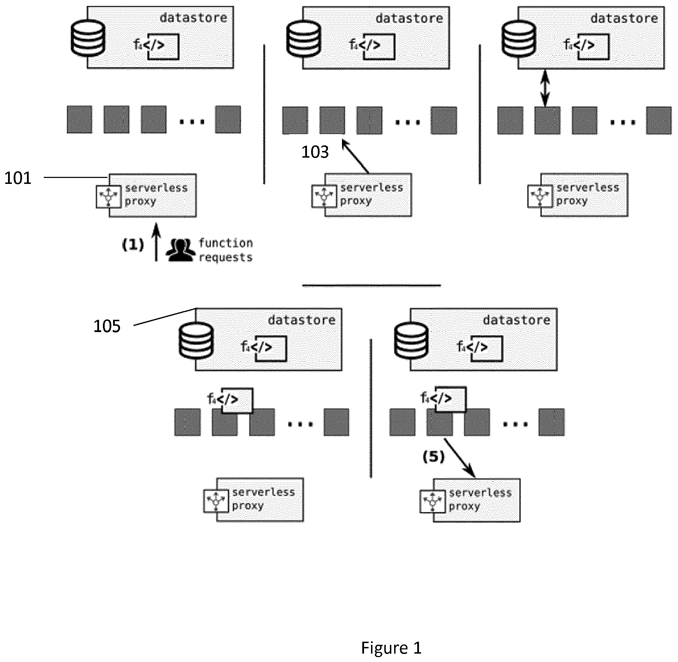

Figure 1 is a schematic representation of a serverless platform according to an example. In the example of figure 1 a serverless application executes one function. User devices access serverless applications using client function requests, e.g. HTTP (marked as I in Figure 1), that include the API of the application and input data to the functions. In turn, requests are routed through the serverless proxy 101. The serverless proxy 101 selects a container 103 to handle a request. Container 103 hosts a function that can serve the request. If the function is not already available in the container 103, it can be fetched from the datastore 105. When the function is available, it consumes the data from the request I, executes the application's code and returns the appropriate response to the client (5).

Since serverless platform providers manage the cloud instances used to serve application requests, platform management is transparent to the application developer or service owner. This means that developers do not need to acquire virtual machines or container instances to develop, test and run application - as is the case in IaaS or PaaS cloud models. Instead, the cloud provider will manage the infrastructure and users are billed according to request demand.

In such an environment, over-provisioning does not generate any revenue - i.e., developers are not charged for un-used instances as happens in other billing models. Therefore, keeping instances of applications up and running for a long time is costly and inefficient for cloud providers.

Currently, orchestration of serverless platforms is neither sophisticated nor efficient. In fact:

• They do not consider service level objectives SLOs (e.g. maximum latency), meaning that delays of provisioning functions can be uncertain. This can jeopardize quality and impact user expectations;

- Although serverless is a lightweight technology, compared to VMs for example, the creation and start up time of containers and functions is not negligible and can be affect application performance, particularly, when demand requires scaling the number of containers;
- They do not share the instances among functions to improve persistence of the execution environments and reduce instantiation delays. That is, containers cannot be reused for different functions and are terminated - even when they could be reused for other functions.

According to an example, there is provided a method to optimize resource management and allocation in serverless platforms in order to seamlessly provide capacity and reduce delay uncertainty when scaling. The method of optimisation can be configured with the service level objective (SLO) that each serverless application should adhere to in mind. Furthermore, the correct number of instances (VMs or containers) can be instantiated in advance, based on, for example, short-term forecasts of traffic demand and without affecting the SLOs. In addition, the number of containers to be created can be reduced by leveraging the fact that is inexpensive to send function code to an existing container instead of creating a new one to improve performance, particularly in platforms hosting multiple applications and serving varying demands.

According to an example, resource scaling can be optimised by computing the minimal (or optimal) number of instances (containers) to serve incoming demand whilst also considering a user's SLOs. A serverless proxy can then be used to distribute the demand fairly among relatively less congested instances. Instances can be created by an orchestrator, or, in an example, some (or all) instances can be reused. That is, information relating to the number of instances that can be reused can be leveraged in order to reassign containers between functions. Thus, the scaling process can create fewer instances from the scratch, thereby reducing instantiation delays.

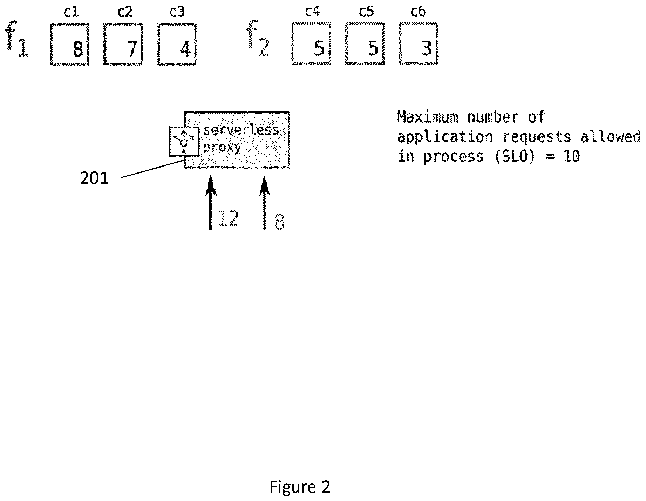

Figure 2 is a schematic representation of a serverless function-as-a-service platform according to an example. The platform comprises 3 containers (c1 , c2, c3) that execute a function f1, and 3 other containers (c4, c5, c6) that execute a function f2. The numbers inside each container represent the requests currently being processed by that container for the function in question. In the example of figure 2, each container is assigned with a static amount of physical resources - this can be done, for example, using control groups on Linux containers.

In the example of figure 2, each function can accommodate or concurrently serve a maximum number of requests (where a request can interchangeably be considered as load, workload and traffic). The number of requests that a function can serve depends on target SLOs as well as the statically allocated physical resources of the underlying container. Each function f1 and f2 in figure 2 can handle 10 requests. Accordingly, any number of requests beyond this value means that an SLO associated with the function in question will be violated. In the example of figure 2, in the short term, the application with f1 will receive, via the serverless proxy 201, 12 new requests, and the application with f2 will receive 8 new requests.

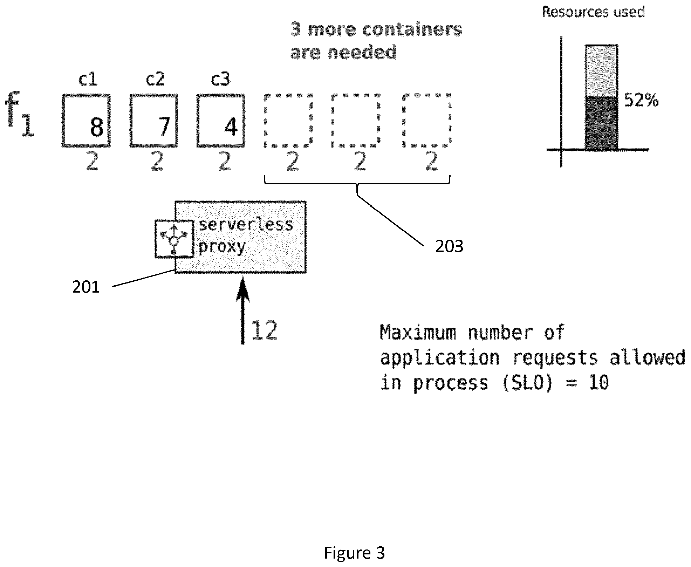

In such scenario, a baseline solution could attempt to accommodate the new requests based on the SLO targets. In this case, since the cloud instance capacity is 10, only 2 requests would be forwarded to c1 (8+2=10) for function I. Similarly, containers c2 and c3 will receive 2 requests each, since the serverless proxy 201 will typically implement a load balancing strategy that equally assigns requests to the function pool. Then, since there are 12 new requests, an orchestrator would thus create 3 more containers 203 (see figure 3) to accommodate the new requests, thereby resulting in an over-dimensioned number of containers that is worse under traffic surges (i.e. rapid increase/decrease of workloads). This is depicted in figure 3, which is a schematic representation of a serverless function as a service platform according to an example in which a baseline approach is used.

In an example, resource usage can be computed as the number of requests that need to be processed, divided by the total capacity of the containers. Thus, in the example of figure 3 there are 31 requests (19 already in the containers plus 12 expected) with a total capacity of 60 (6 containers and 10 requests per container): $31/60 \sim 0,52$ (52%).

According to an example, in order to accommodate new requests, highly congested containers can be detached or logically isolated from the load balancer (serverless proxy). Containers that are logically isolated continue to function and process their existing traffic, but do not receive new requests until they are re-attached to the load balancer.

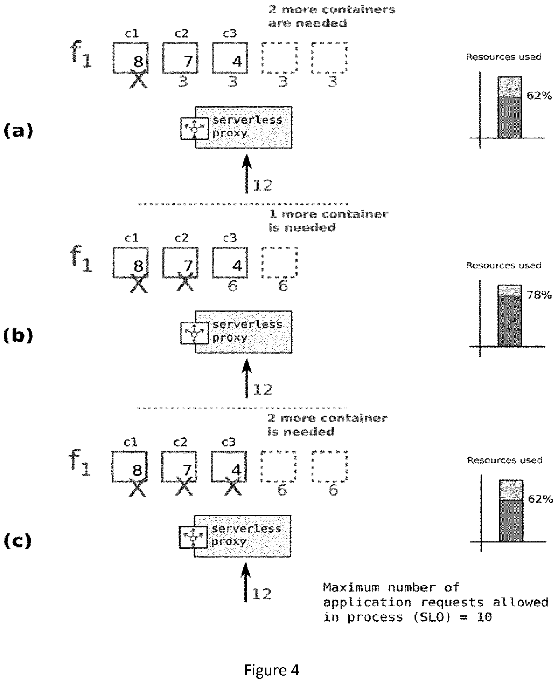

Figures 4a-c are schematic representations of a serverless function-as-a-service platform according to an example. In figure 4a, container c1 is detached for a period of time as it is the container serving the largest number of requests in a given time slot (described in more detail below). The next most congested container is c2 (with 7 requests), so no more than 3 requests can be sent to it (again assuming that in the example of figure 4, each container executing the function f1 can accommodate 10 concurrent requests before an SLO violation and/or a physical hardware overload). In this case therefore, 2 new containers would be needed to serve the workload - a total of 4 active containers if we consider that there are 2 containers already running. Figure 4b shows another option in which 2 containers, c1 and c2, are detached. In this case, only one new container would be added. Finally, figure 4c shows an example in which containers c1, c2 and c3 are detached. In this case, two new containers would be added. The corresponding resource usage is depicted for each of the examples shown in figures 4a to 4c, calculated as described above.

According to an example, from these permutations, in which various different containers for the function are logically isolated from the others, there is a determination of how to reassign a function to (non-isolated) containers to minimize the number of containers that need to be created. In the example of figure 4, the permutation of figure 4b results in a requirement for only one additional container, and a performance improvement as a result of 78% of resources being utilised (31 requests to be served/40 requests as maximum capacity). This compared to the examples of 4a and 4b in which 62% of resources are utilised, which is less efficient in the context of a serverless platform. Since a container can take, for example, at least 500ms to start, the solution of figure 4b reduces the delay (compared to the other examples of figure 4 and the baseline of figure 3) to 500ms (only I additional container instantiated).

Accordingly, for a given number of containers configured to execute a function in a serverless platform, various permutations of the containers available to accommodate additional load are compared in order to determine a minimum number of containers to be instantiated in order to meet demand and maximise resource usage. In an example, the various configurations of containers are generated by logically isolating different combinations of one or more containers, particularly those with an already relatively higher workload compared to the others or a workload that is equal to or greater than that specified in an SLO for the function. In this manner, a minimum number of additional containers to accommodate the workload can be determined. In an example, a permutation can be generated by logically isolating any number of containers from none to all containers.

According to an example, having determined an optimum number of additional containers to service an incoming workload for a first function, existing containers being utilised for a second function, different from the first function, can be reassigned to serve the workload. As such, one or more new containers need not be instantiated since existing containers can be reused. A decision to reuse a container can be made considering the current throughput of the second function, the average completion time of the requests for such a function (in order to estimate the draining or request depletion time for a container), and the creation plus provisioning times of new containers. Accordingly, existing resources serving a workload that is low enough to be consolidated into a lower number of containers can be reused. If the time it would take for a container to become available for reassignment is larger than the time it would take to instantiate a new container for a function, a new container can be instantiated, otherwise, to reduce delays, the existing container can be reassigned when available, i.e. once it has finished serving its current load.

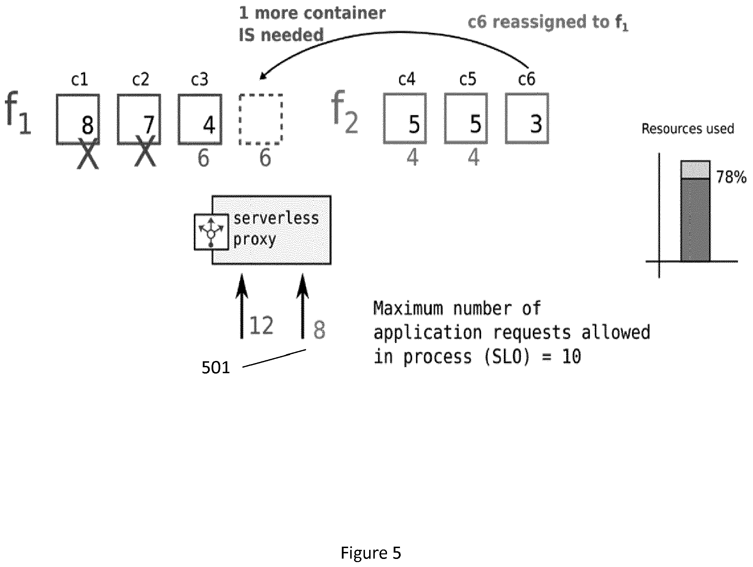

Figure 5 is a schematic representation of a serverless function-as-a-service platform according to an example. The requests served by the containers for function f1 are the same as in figure 4b, as is the determination that an additional container can be used to efficiently service incoming workload, which as before is 12 requests for the function f1. In the example of figure 5 however, other containers in the platform are inspected in order to identify potential targets for reassignment before deciding to scale.

In the example of figure 5, another function (f2) is deployed on containers c4, c5, c6, and the workload for f2 is predicted to decrease. In this case, all requests for f2 are gracefully drained and then the code of f1 can be retrieved from the datastore (e.g. 105) and deployed in c6, thereby eliminating the need to create a new container. Container c6 is processing 3 requests, and there are 8 incoming requests (501) for function f2. If the maximum number of requests allowed per container for function f2 is 10, the 8 new requests can be accommodated using the existing containers c4 and c5 by distributing 4 requests to each. The 3 requests being processing in container c6 will therefore be dealt with, leaving container c6 'empty'. If the time taken to complete the three requests in c6 plus the time taken to retrieve and deploy the function f1 in container c6 is less than time it would take to instantiate a new container for the function f1, in an example, container c6 is reassigned to function f1.

Draining all requests of f2 gracefully may take time and is dependent on the application. Therefore, in an example, the cost of reassigning a container to another function can be computed so that a determination can be made as to whether is more effective to reassign a container or to scale a new one.

Therefore, the optimal number of instances to serve incoming requests without violating SLOs by preventing congested instances from receiving new (incoming) workload (requests) can be determined. In addition, the need to instantiate new instances can be reduced by reassigning functions amongst extant containers. The combination of these two techniques enables automation of a resource management process in a serverless platform, thereby making it more efficient in terms of resources usage and achieving SLO targets of applications.

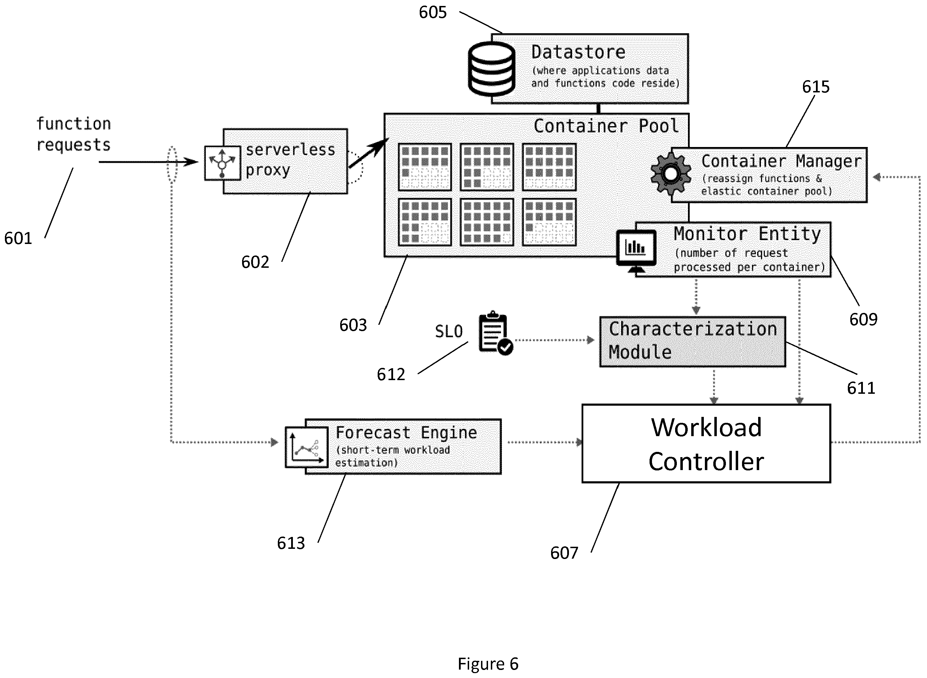

Figure 6 is a schematic representation of a virtualised computing platform according to an example. Function requests 601 from users (not shown) are distributed across instantiated containers within a container pool 603 using a load balancer (serverless proxy) 602. The container pool 603 can comprise multiple containers executing over physical hardware, and multiple functions can be served by multiple sets of containers. As depicted in figure 6 for example, there are 6 groups of containers in the container pool 603, each of which may serve requests relating to different functions.

Accordingly, functions run over a pool of containers, which are managed by an underlying orchestration system. Function instructions and execution states can be stored in the datastore 605 accessible from the resource pool 603.

According to an example, workload controller 607 periodically receives information from the Monitor Entity 609 available in the platform. The information has i) the current collocation of functions across containers; ii) the current number of requests each function is processing. The workload controller 607 can be either coupled to a characterization module 611 to obtain information about the maximum number of requests that a function can process simultaneously in each container; or calculate this information on-demand and compare it to SLO targets 612 of the application.

A forecast engine 613 can be provided to enable provisioning for functions ahead of time thereby enabling more accurate decisions to reassign or scale containers while reducing performance degradation caused by workloads surges. The forecast engine 613 can receive information representing incoming requests for functions before such requests are distributed by the serverless proxy 602.

In an example, workload controller 607 can create and terminate containers and control the pool of resources using the Container Manager 615, which is configured to enable instantiation or termination of container instances within the pool 603. The workload controller 607 can decide on a level of scaling and reassignment periodically, i.e. every time slot T, where T can be of the order of seconds or minutes.

Accordingly, the virtualised computing platform with workload controller 607 can logically detach one or more of multiple containers configured to execute a first function for the platform, the containers within the container pool 603, and form a container group comprising a set of available containers and allocate respective ones of incoming requests 601 for the function to one or more containers in the container group. A container in the group may comprise an existing container for the function and/or a reassigned container that was previously used to serve requests relating to a different function. That is, isolation of high workload containers enables a determination to be made as to an optimal number of additional containers to be provided to service an incoming workload. One or more of the additional containers can be provided by instantiation or reassignment of existing containers.

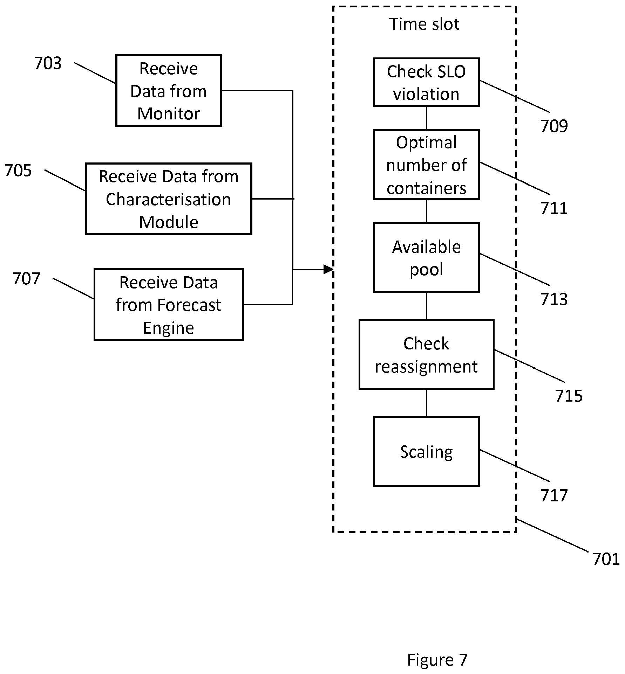

Figure 7 is a flowchart of a method according to an example. Expected request arrivals are treated in time slots as "atomic" arrivals. Thus, at each timeslot 701 the workload controller 607 receives (block 703) a current number of requests in process (workload) at each container, and information representing a set containing the containers processing each function from the Monitor 609. In block 705 the workload controller 607 receives a maximum number of requests that can be processed per function in each container from the Characterization Module 611, and in block 707 the workload controller 607 receives a short-term prediction of the number of requests expected for each function in the time slot from Forecast Engine 613.

In block 709 a check of SLO violations is performed. That is, containers in which the current number of requests in process are larger than a corresponding maximum specified SLO load, or which are at a predetermined threshold level that corresponds to a proportion of the maximum specified SLO load (e.g. 80%) are not considered. That is, such containers are detached or logically isolated from the load balancer so that they will not receive additional requests in the following timeslot.

In block 711, for each function, $f$, being served by one or more containers, the number of 'optimal' containers, $OC_f$, can be determined according to:

$$OC_f = \underset{index_{skipped}}{\arg\min} \left\lceil \frac{\tilde{L}_f}{l_f - l_{index_{skipped}}} \right\rceil - (|C_f| - index_{skipped} + 1)$$

where:

$L_f$ is the forecasted future requests for $f$;
$L_f$ is the maximum number of requests that can be processed by each container according to an SLO;
$index_{skipped}$ is a variable that controls the number of highly congested containers that can be skipped;
$lindex_{skipped}$ is the number of requests currently in process for the analysed container (if this number is less than the number in process at instantiation of the container that number is used instead); and
$C_f$ is a set containing the containers that process f without the containers that are isolated.

According to an example, for each function, the corresponding value of $OC_f$ is checked:

$OC_f > 0$; additional containers are needed, and the function in question is added to a set **F⁺**;
$OC_f < 0$; fewer containers are needed. Empty or emptying containers are detached from the function pool and added to an 'available' pool, **C⁻**

In block 713, functions in **F⁺** are ranked in decreasing order of the highest loaded container executing that function. Each container in **C⁻** (containers that can be reassigned) may have a load to be depleted before they may be reassigned. In an example, the containers in **C⁻** are ranked in decreasing order of such a delay. The functions in **F⁺** are iterated over in their order. For a function, f, in **F⁺**, $OC_f$ containers are desired. According to an example, containers that may be desired to augment an existing set of containers serving a function may be found from **C⁻** in the event that the load of a container to be reassigned is less than the maximum load of the containers assigned to *f*.

In block 715 containers successfully assigned to the function under consideration are removed from **C⁻**. If more containers are needed that are not available in **C⁻** they can be instantiated for the function. Spare container in **C⁻**, if any, are stopped if they are idle (zero load). Otherwise they can be reassigned to their initial functions.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a function as a service platform comprising multiple containers configured to execute a function, for allocating workload in response to incoming requests, the method comprising:

   determining a current number of requests to be executed by respective ones of the multiple containers;
   logically isolating one or more of the multiple containers in which the current number of requests to be executed exceeds a predetermined threshold value related to a service level objective for the function;
   forming a container group composed of non-isolated containers; and
   allocating the incoming requests between respective ones of the containers in the container group.

2. The method as claimed in claim 1, further comprising:
   supplementing the number of containers in the container group by instantiating one or more containers for the function.

3. The method as claimed in claim 1 or 2, further comprising:
   supplementing the number of containers in the container group by reassigning a container configured to execute a second function in the platform to the container group.

4. The method as claimed in claim 3, further comprising:
   re-tasking the reassigned container to execute the function.

5. The method as claimed in any preceding claim, further comprising:
   for the function, determining an optimal number of the multiple containers to logically isolate.

6. The method as claimed in any preceding claim further comprising:
   unifying an isolated container into the container group.

7. A virtualised computing platform, comprising a workload controller to:

   logically detach one or more of multiple containers configured to execute a first function for the platform, whereby to form a container group comprising a set of available containers; and
   allocate respective ones of incoming requests for the function to one or more containers in the container group.

8. The virtualised computing platform as claimed in claim 7, the workload controller further to:
   supplement the number of containers in the container group by instantiating one or more containers for the function.

9. The virtualised computing platform as claimed in claim 7 or 8, the workload controller further to:
   supplement the number of containers in the container group by reassigning an existing container configured to execute a second function in the platform to the container group.

10. The virtualised computing platform as claimed in claim 9, the workload controller further to:

    determine a first period of time remaining before the existing container finishes executing any pending requests relating to the second function;
    determine a second period of time to instantiate a new container for the container group; and
    re-task the existing container to execute the first function when the pending requests are executed and the first period of time is less than the second period of time.

11. A workload controller in a serverless function-as-a-service platform, the workload controller to:

logically isolate one or more of multiple containers configured to execute a first function for the platform, whereby to form a container group comprising a set of available containers; and
allocate respective ones of incoming requests for the function to one or more containers in the container group.

12. The workload controller as claimed in claim 11, further to:
augment the container group with one or more additional containers configured to execute the first function, wherein at least one of the additional containers is reassigned from a second function.

13. The workload controller as claimed in claim 11 or 12, further to:
receive data representing an expected load for the function.

14. The workload controller as claimed in claim 12, further to:
remove a reassigned container from a set of available containers.

15. The workload controller as claimed in any of claims 11 to 14, further to:
re-attach a logically isolated container to the platform.

Figure 1

f_1

c1
8

c2
7

c3
4

f_2

c4
5

c5
5

c6
3

serverless
proxy

12

8

201

Maximum number of
application requests allowed
in process (SLO) = 10

Figure 2

Resources used

52%

3 more containers
are needed

203

$f_1$

c1  8  2

c2  7  2

c3  4  2

2   2   2

serverless
proxy

12

201

Maximum number of
application requests allowed
in process (SLO) = 10

Figure 3

Figure 4

Figure 5

Figure 6

EP 3 561 671 A1

Figure 7

Europäisches
Patentamt

European
Patent Office

Office européen
des brevets

# EUROPEAN SEARCH REPORT

Application Number

EP 18 16 9702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 405 593 B2 (RED HAT INC [US]) 2 August 2016 (2016-08-02) * column 4, line 5 - line 7 * * column 9, line 1 - line 7 * * column 9, line 24 - line 28 * * column 9, line 59 - line 62 * * column 11, line 12 - line 14 * ----- | 1-15 | INV. G06F9/50 |
| X | WO 2013/003031 A2 (MICROSOFT CORP [US]) 3 January 2013 (2013-01-03) * the whole document * ----- | 1,7,11 | |
| A | WO 2016/090292 A1 (AMAZON TECH INC [US]) 9 June 2016 (2016-06-09) * paragraphs [0062], [0067] * ----- | 3,4,9, 10,12 | |
| A | US 2013/346969 A1 (SHANMUGANATHAN GANESHA [US] ET AL) 26 December 2013 (2013-12-26) * the whole document * ----- | 13 | |

|  |
|---|
| **TECHNICAL FIELDS SEARCHED (IPC)** |
| G06F |

The present search report has been drawn up for all claims

| Place of search | Date of completion of the search | Examiner |
|---|---|---|
| The Hague | 15 October 2018 | Gratia, Romain |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 16 9702

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2018

| Patent document cited in search report | | Publication date | Patent family member(s) | | Publication date |
|---|---|---|---|---|---|
| US 9405593 | B2 | 02-08-2016 | US 2014068611 A1<br>US 2015154057 A1 | | 06-03-2014<br>04-06-2015 |
| WO 2013003031 | A2 | 03-01-2013 | CN 103649920 A<br>EP 2724232 A2<br>US 2012330711 A1<br>WO 2013003031 A2 | | 19-03-2014<br>30-04-2014<br>27-12-2012<br>03-01-2013 |
| WO 2016090292 | A1 | 09-06-2016 | CA 2969812 A1<br>CN 107209682 A<br>EP 3227781 A1<br>JP 2018503896 A<br>US 2016164762 A1<br>US 2016164797 A1<br>US 2017206116 A1<br>WO 2016090292 A1 | | 09-06-2016<br>26-09-2017<br>11-10-2017<br>08-02-2018<br>09-06-2016<br>09-06-2016<br>20-07-2017<br>09-06-2016 |
| US 2013346969 | A1 | 26-12-2013 | NONE | | |

EPO FORM P0459

For more details about this annex : see Official Journal of the European Patent Office, No. 12/82